# EUROPEAN PATENT APPLICATION

(11) **EP 3 892 145 A1**
(43) Date of publication of application: **13.10.2021**
(21) Application number: 19897843.9
(22) Date of filing: 18.12.2019
(51) Int. Cl.: A42B 3/04

(54) **HELMET AND CHARGING SYSTEM**

(30) Priority: 20.12.2018 JP 2018238199; 20.12.2018 JP 2018238200; 20.12.2018 JP 2018238201; 20.12.2018 JP 2018238202
(71) Applicant: NS West Inc., Shobara-shi, Hiroshima, 727-0004 (JP); SHOEI CO., LTD., Taito-ku Tokyo 110-0016 (JP)
(72) Inventor: SATOU Kou, Shobara-shi, Hiroshima 727-0004 (JP); YAMADA Manabu, Shobara-shi, Hiroshima 727-0004 (JP); HIRAMATSU Masanori, Shobara-shi, Hiroshima 727-0004 (JP); MATSUMOTO Yuusuke, Shobara-shi, Hiroshima 727-0004 (JP); MATSUOKA Naoya, Shobara-shi, Hiroshima 727-0004 (JP); AOI Kousuke, Shobara-shi, Hiroshima 727-0004 (JP); TANAKA Yoshimasa, Shobara-shi, Hiroshima 727-0004 (JP); ASAOKA Hirotaka, Shobara-shi, Hiroshima 727-0004 (JP)
(74) Representative: BRP Renaud & Partner mbB Rechtsanwälte Patentanwälte Steuerberater
(86) International application number: PCT/JP2019/049572
(87) International publication number: WO 2020/130029

(57) **Abstract**

In a helmet 1 including a battery 23 and a helmet body 3 whose outer surface is constituted by a shell 13, a charging connector 16 is disposed inside the shell 13 to face inward of the shell 13, and the charging connector 16 is configured to be connected to a power supply-side connector 31 connected to a power supply 35 through a power supply-side cable 33 during charging of the battery 23.

## Description

### TECHNICAL FIELD

The present disclosure relates to a helmet including a battery and a helmet body whose outer surface is constituted by a shell, and to a charging system.

### BACKGROUND ART

A helmet including a helmet body whose outer surface is constituted by a shell has been known to date (see, for example, PATENT DOCUMENT 1).

PATENT DOCUMENT 2 also describes a helmet in which a battery is housed in a case provided on the outer surface of an occipital portion of the helmet.

### CITATION LIST

### PATENT DOCUMENT

PATENT DOCUMENT 1: Japanese Patent Application Publication No. 2018-115410
PATENT DOCUMENT 2: Japanese Patent Application Publication No. 2008-65593

### SUMMARY OF THE INVENTION

### TECHNICAL PROBLEM

In a case where the helmet of PATENT DOCUMENT 1 is equipped with a battery as described in PATENT DOCUMENT 2, if a charging connector for use in charging a battery is provided to face the outer side of the shell, the charging connector is likely to fail because of exposure to the weather. In addition, the charging connector is exposed and conspicuous on the outer surface of the shell, which degrades appearance of the helmet.

It is therefore an object of the present disclosure to prevent or reduce a failure of a charging connector due to exposure to the weather with enhanced appearance of a helmet.

### SOLUTION TO THE PROBLEM

To achieve the object, the present disclosure is directed to a helmet including a battery and a helmet body whose outer surface is constituted by a shell, and provides the following solutions.

Specifically, a charging connector is disposed inside the shell to face inward or downward of the helmet body, the charging connector being configured to be connected to a power supply-side connector connected to a power supply through a power supply-side cable during charging of the battery.

With this configuration, since the charging connector is not exposed on the outer side of the shell, appearance of the helmet can be enhanced, as compared to a case where the charging connector is disposed to face the outer side of the shell.

In addition, since the outer side of the charging connector is covered with the shell, a failure of the charging connector due to exposure to the weather can be prevented or reduced.

The charging connector may be disposed to face inward of the helmet body.

With this configuration, during charging of the battery, the power supply-side connector is connected to the charging connector from the inner side of the helmet body, and the power supply-side cable is partially located inside the helmet body to hinder wearing of the helmet. This makes it possible to prevent or reduce wearing of the helmet during charging in which troubles such as heating and ignition of the battery are more likely occur than during non-charging.

The charging connector may be disposed at a portion covering temple or occipital of a helmet wearer on an inner surface of the helmet body.

With this configuration, during charging of the battery, the power supply-side connector is connected to the charging connector from the inner side on a portion of the inner surface of the helmet body covering a temple or the occipital of the helmet wearer, and the power supply-side cable is located at a position interfering with the temple or the occipital of the helmet wearer. This further ensures prevention or reduction of wearing of the helmet during charging of the battery.

A charging control device may be disposed at a portion of the helmet body covering chin of the helmet wearer, the charging control device being configured to control charging to the battery based on a connection state between the charging connector and the power supply-side connector, and the charging connector may be disposed at a portion covering chin of a helmet wearer on an inner surface of the helmet body.

With this configuration, as compared to a case where the charging connector is located in an occipital portion, for example, the charging connector is located near the charging control device. Thus, wires connecting the charging connector and the charging control device can be made short.

A charging system includes: the helmet; the power supply-side connector; and the power supply-side cable, and the power supply-side connector is configured to be separated from a flat surface in an on-surface charging state where the helmet body is placed on the flat surface with a lower end surface of the helmet body facing downward and where the charging connector and the power supply-side connector are connected to each other.

With this configuration, it is possible to prevent or reduce damage of the power supply-side connector and backlash of the helmet caused by contact of the power supply-side connector with the flat surface in the on-surface charging state.

A lower end surface of the helmet body may have a gap portion, the gap portion forming a gap between the gap portion and the flat surface in which the power supply-side cable is capable of being inserted in the on-surface charging state.

With this configuration, the power supply-side cable can be inserted in the gap between the gap portion of the helmet body and the flat surface in the on-surface charging state. This makes it possible to prevent or reduce damage of the power supply-side cable caused by sandwiching of the power supply-side cable between the lower edge of the helmet body and the flat surface.

The present disclosure is also directed to a helmet including: a shell; and a shock absorbing liner disposed inside the shell, the shock absorbing liner is made of a material having a thermal conductivity lower than a thermal conductivity of the shell, and a battery unit is inserted between the shell and the shock absorbing liner, the battery unit including a battery case and a battery housed in battery case.

With this configuration, since the battery unit is not exposed on the outer surface of the shell, appearance of the helmet can be enhanced, as compared to a case where the battery unit is provided on the outer surface of the shell.

In addition, since the thermal conductivity of the shell is higher than the thermal conductivity of the shock absorbing liner, heat of the battery unit more easily transfers to the shell than to the shock absorbing liner. Accordingly, it is possible to reduce transfer of heat of the battery unit to the head of the helmet wearer through the shock absorbing liner when the battery reaches a high temperature because of a failure.

In addition, when the helmet body collides against the ground or the like, a load of this collision is absorbed in the shock absorbing liner. Accordingly, a shock load exerted on the battery unit at the collision can be reduced.

Furthermore, since the shell covers the outer side of the battery unit, the battery unit is not likely to fly out of the helmet body.

An air layer may be interposed between the shock absorbing liner and the battery unit.

With this configuration, since the air layer having a low thermal conductivity is interposed between the battery unit and the shock absorbing liner, heat of the battery unit does not easily transfer to the shock absorbing liner. This makes it possible to reduce transfer of heat of the battery unit to the head of the helmet wearer more effectively.

The shell may have a thermal conductivity of 0.2 W/(m·K) or more, and the shock absorbing liner may have a thermal conductivity of 0.05 W/(m·K) or less.

With this configuration, since the thermal conductivity of the shell is set at 0.2 W/(m·K) or more, heat of the battery unit more easily transfers to the shell than that in a case where the thermal conductivity of the shell is less than 0.2 W/(m·K). This makes it possible to prevent or reduce accumulation of heat of the battery unit between the shell and the shock absorbing liner to thereby reduce heating of the battery.

In addition, since the thermal conductivity of the shock absorbing liner is set at 0.05 W/(m·K) or less, heat of the battery unit less easily transfers to the shock absorbing liner than in a case where the thermal conductivity of the shock absorbing liner is set at a value exceeding 0.05 W/(m·K). This makes it possible to reduce transfer of heat of the battery unit to the head of the helmet wearer more effectively.

The battery unit may be covered, from below, with a member interposed between a lower end of the shell and a lower end of the shock absorbing liner, and is either exposed downward or made of a material having a thermal conductivity higher than a thermal conductivity of the shock absorbing liner.

With this configuration, heat of the battery unit can be released downward. Thus, it is possible to reduce transfer of heat of the battery unit to the head of the wearer through the shock absorbing liner. In addition, accumulation of heat of the battery unit between the shell and the shock absorbing liner can be prevented or reduced, and heating of the battery can be thereby reduced.

The battery case may have a thermal conductivity less than 0.2 W/(m·K).

With this configuration, since the thermal conductivity of the battery case is set to be less than 0.2 W/(m·K), heat of the battery less easily transfers to the shock absorbing liner through the battery case than in a case where the thermal conductivity of the battery case is set at 0.2 W/(m·K) or more. This makes it possible to reduce transfer of heat of the battery to the head of the helmet wearer more effectively.

A thickness of a region of the shock absorbing liner where the battery unit is interposed between the shock absorbing liner and the shock absorbing liner may be set at 20 mm or more.

With this configuration, as compared to a case where the thickness of the shock absorbing liner in a region where the battery unit is interposed between the shock absorbing liner and the shell is set to be less than 20 mm, transfer of heat of the battery to the head of the helmet wearer through the shock absorbing liner can be effectively reduced.

At least one of a lower end surface of the helmet body or the shell may have an opening, a battery and a battery unit may be disposed inside the shell, the battery unit having a releasing hole from which an exhaust gas from the battery is released, the battery unit including a battery case configured to house the battery, and the opening of the helmet body and the releasing hole of the battery case may communicate with each other.

With this configuration, since the battery unit is not exposed on the outer surface of the shell, appearance of the helmet can be enhanced, as compared to a case where the battery unit is provided on the outer surface of the shell.

In addition, since an exhaust gas from the battery is released to the outside of the helmet body through the releasing hole of the battery case and the opening portion of the helmet body, it is possible to reduce accumulation of the exhaust gas in the shell and a flow of the exhaust gas toward a vicinity of the face of the helmet wearer.

Furthermore, since heat of the battery can be released to the outside of the helmet body through the releasing hole of the battery case and the opening portion of the helmet body, heat of the battery transferring to the head of the helmet wearer can be reduced.

A gas vent passage configured to guide exhaust gas from the releasing hole to the opening of the helmet body may be formed between the opening of the helmet body and the releasing hole of the battery case.

With this configuration, since the gas vent passage is interposed between the opening portion of the helmet body and the releasing hole of the battery case, the opening portion of the helmet body and the releasing hole of the battery case can be disposed at separate positions. As a result, flexibility in arranging the opening portion of the helmet body and the releasing hole of the battery case can be increased.

A waterproof ventilation filter may be disposed at the opening of the helmet body or the releasing hole of the battery case such that the waterproof ventilation filter restricts water infiltration into the battery case.

With this configuration, since the waterproof ventilation filter restricts infiltration of water into the battery case, a failure of the battery due to water infiltration can be prevented or reduced.

The opening portion may be formed in the shell.

With this configuration, it is possible to reduce contact with a high-temperature exhaust gas to the neck of the helmet wearer, as compared to a case where the opening portion is formed in the lower end surface of the helmet body.

The opening portion may be formed above a center in a top-bottom direction of the shell.

With this configuration, since the face of a passenger on a rear seat is often located near a lower portion of the shell in general, it is possible to reduce contact of a high-temperature exhaust gas with the face of the passenger on the rear seat, as compared to a case where the opening portion is formed in the lower portion of the shell.

A front portion or a side portion of the shell may also include an air inlet, and a ventilation passage may be formed between the air inlet of the shell and the gas vent passage, the ventilation passage being configured to guide air introduced from the air inlet to the gas vent passage.

With this configuration, when a user drives, for example, a motorcycle while wearing the helmet, wind blowing from the front causes the outdoor air to be guided to the gas vent passage through the air inlet and the ventilation passage and merge with an exhaust gas flowing in the gas vent passage. Accordingly, the temperature of an exhaust gas released from the opening portion can be reduced.

The helmet may also include a switch device disposed on an outer surface of the shell, the switch device being configured to output an input signal in response to an operation input; and a signal processing device disposed inside the shell, the signal processing device being configured to operate based on the input signal, the switch device and the signal processing device may be connected to each other by a cable unit, the cable unit including first and second cables configured to transmit the input signal, a first connector disposed at one end of the first cable, and a second connector disposed at one end of the second cable and detachably connected to the first connector.

With this configuration, as compared to a case where the cable unit is constituted only by a single cable, when the helmet collides against the ground, the first and second connectors are easily separated and the switch device is easily detached from the signal processing device by a shock of the collision. Thus, the helmet body is not pulled by the switch device caught by an external object upon the collision against the ground.

The shell may have an insertion hole penetrating through the shell, the switch device may be disposed on the outer surface of the shell to cover the insertion hole from outside, and the cable unit may be inserted in the insertion hole.

With this configuration, the switch device and the signal processing device can be connected to each other by the cable unit without the necessity for exposing the cable unit on the outer surface of the shell. Thus, appearance of the helmet can be enhanced.

### ADVANTAGES OF THE INVENTION

The present disclosure can prevent or reduce a failure of a charging connector due to exposure to the weather and can enhance appearance of a helmet.

### BRIEF DESCRIPTION OF THE DRAWINGS

[FIG. 1] FIG. 1 is a side view illustrating a charging system according to a first embodiment of the present disclosure.
[FIG. 2] FIG. 2 is a front view illustrating a helmet according to the first embodiment of the present disclosure.
[FIG. 3] FIG. 3 is a schematic cross-sectional view of the charging system taken along line III―III in FIG. 1.
[FIG. 4] FIG. 4 is a view for a second embodiment corresponding to FIG. 3.
[FIG. 5] FIG. 5 is a view for a third embodiment corresponding to FIG. 2.
[FIG. 6] FIG. 6 is a bottom view illustrating a helmet according to a third embodiment.
[FIG. 7] FIG. 7 is a view for a fourth embodiment corresponding to FIG. 3.
[FIG. 8] FIG. 8 is a view for the fourth embodiment corresponding to FIG. 6.
[FIG. 9] FIG. 9 is a side view illustrating a helmet according to a fifth embodiment.
[FIG. 10] FIG. 10 is a view for a sixth embodiment corresponding to FIG. 3.
[FIG. 11] FIG. 11 is a side view illustrating a helmet according to a seventh embodiment.
[FIG. 12] FIG. 12 is an outline view illustrating a configuration of a navigation system according to an eighth embodiment including a helmet.
[FIG. 13] FIG. 13 is a functional block diagram illustrating a configuration of the navigation system according to the eighth embodiment including the helmet.

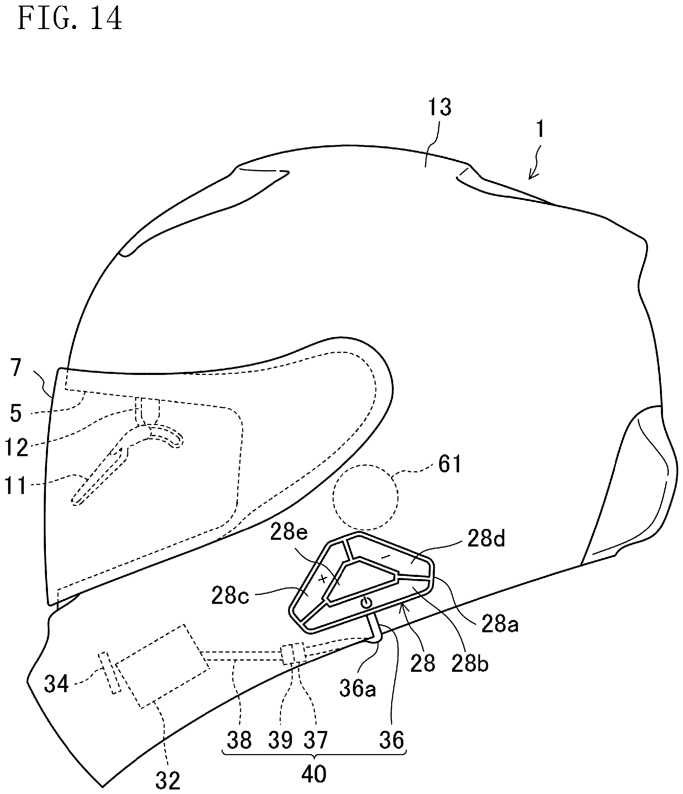

[FIG. 14] FIG. 14 is a side view illustrating the helmet according to the eighth embodiment.
[FIG. 15] FIG. 15 illustrates a guide image generated by a display light emitting device.
[FIG. 16] FIG. 16 is a view for a ninth embodiment corresponding to FIG. 14.

### DESCRIPTION OF EMBODIMENTS

Embodiments of the present disclosure will be described with reference to the drawings.

### FIRST EMBODIMENT

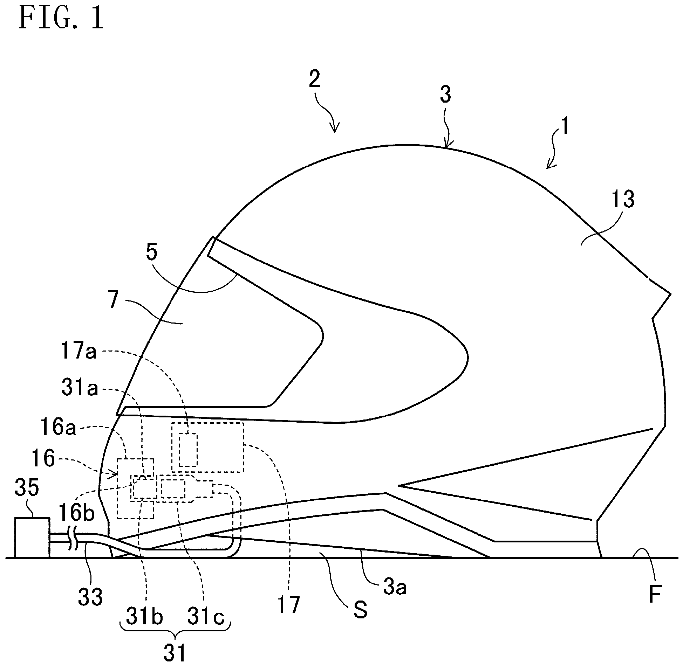

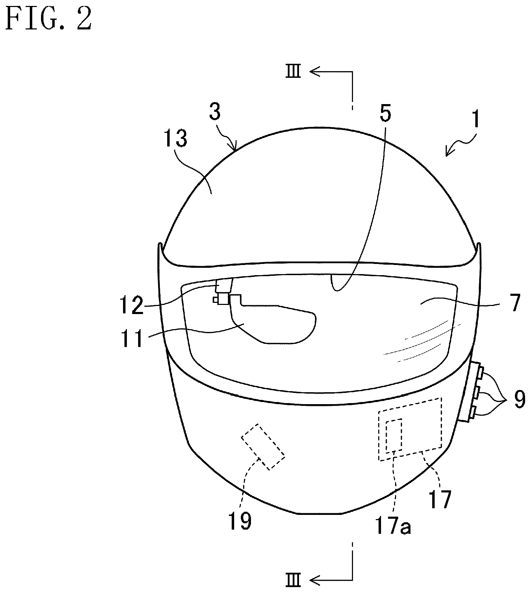

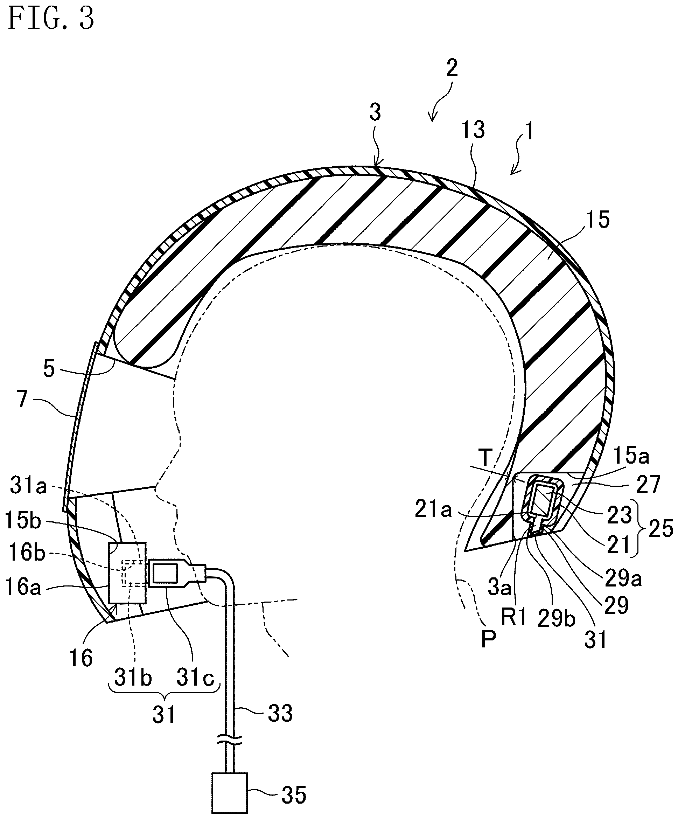

FIG. 1 illustrates a helmet 1 according to a first embodiment of the present disclosure and a charging system 2 equipped with the helmet 1. As also illustrated in FIGS. 2 and 3, the helmet 1 includes a helmet body 3 as a main component of the helmet 1. The front surface of the helmet body 3 has a window opening 5 facing an area between the forehead and the chin of a helmet wearer P. A shield 7 having transparency to light is attached to the left and right sides of a peripheral portion of the window opening 5 such that the window opening 5 is opened and closed by upward and downward pivots of the shield 7. A plurality of switches 9 are provided at the left of the window opening 5 on the outer surface of the helmet body 3 when seen from the helmet wearer P, specifically, at a position corresponding to the left ear of the helmet wearer P. A translucent plate-shaped combiner 11 is attached to a right portion of the center in the left-right direction when seen from the helmet wearer P on an upper edge portion window opening 5 of the helmet body 3, with an attachment member 12 interposed between the combiner 11 and the right portion. In FIG. 1, a periphery of the switches 9, the combiner 11, and the attachment member 12 are not shown.

The helmet body 3 includes a shell 13 constituting the outer surface of the helmet body 3, and a shock absorbing liner 15 fixed to the inner side of the shell 13 to cover the entire inner surface of the shell 13. The shell 13 has a shape covering the head and the neck of the helmet wearer P from above and from the sides. The shell 13 has a thermal conductivity of 0.2 W/(m·K) or more. Specifically, the shell 13 is made of fiber-reinforced plastic (FRP) having a thermal conductivity of 0.5 to 1.0 W/(m·K).

The shock absorbing liner 15 is made of a material having a thermal conductivity lower than that of the shell 13. The shock absorbing liner 15 has a thermal conductivity of 0.05 W/(m·K) or less. Specifically, the shock absorbing liner 15 is made of expanded polystyrene (EPS) having a thermal conductivity of 0.04 W/(m·K). A concavity 15a that is recessed forward is formed on the rear surface of the lower end portion (i.e., a portion covering a rear portion of the neck of the helmet wearer P) at the center in the left-right direction of a rear portion of the shock absorbing liner 15. Accordingly, the lower end surface of the helmet body 3 has an opening portion 3a sandwiched between the shell 13 and the concavity 15a of the shock absorbing liner 15.

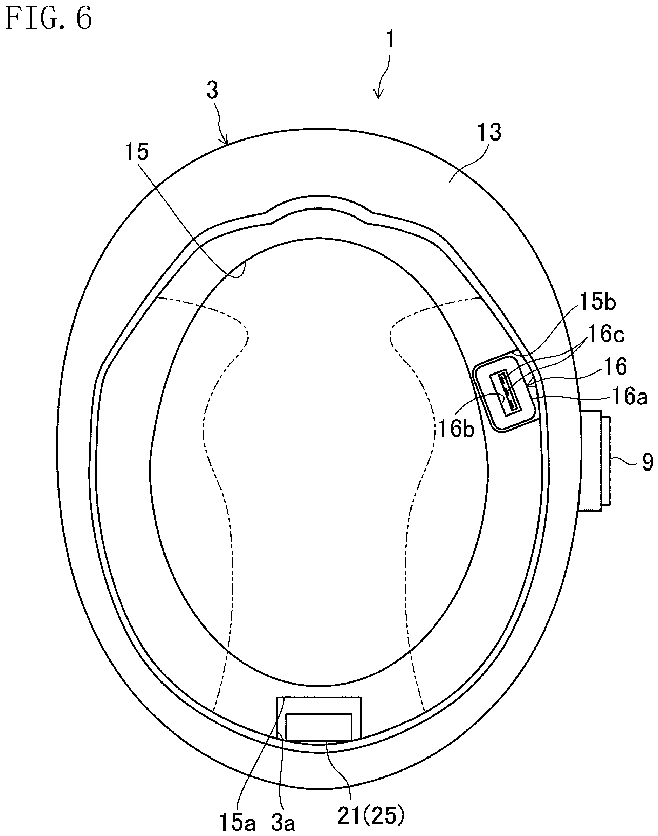

A thickness T of a thinnest portion of the shock absorbing liner 15 where the concavity 15a is formed, is set at 20 mm or more. A recess 15b that is recessed forward is formed on the inner surface of a vicinity of the lower end (i.e., a portion covering the chin of the helmet wearer P) at the center in the left-right direction of a front portion of the shock absorbing liner 15. In the recess 15b, a charging connector 16 is disposed to face inward of the helmet body 3. The charging connector 16 includes a connector housing 16a. The connector housing 16a has an insertion hole 16b that is open at the inner side of the helmet body 3. A plurality of charging electrodes 16c (see FIG. 6) are disposed in the insertion hole 16b.

A recessed portion 3a as a gas portion that is recessed upward in a side view is formed in a portion of the lower end surface of the helmet body 3, that is, the lower end surfaces of the shell 13 and the shock absorbing liner 15, except for a rear end portion thereof. A front portion of the recessed portion 3a tilts upward toward the rear, whereas a rear portion of the recessed portion 3a tilts upward toward the front.

A battery unit 25 is interposed between the shell 13 and the shock absorbing liner 15. Specifically, the battery unit 25 including a battery case 21 and a battery 23 housed in the battery case 21 is housed in the concavity 15a and interposed between a lower end portion at the center in the left-right direction of a rear portion of the shell 13 and a lower end portion at the center in the left-right direction of a rear portion of the shock absorbing liner 15, that is, the concavity 15a. The battery case 21 has a thermal conductivity less than 0.2 W/(m·K). Specifically, the battery case 21 is made of polycarbonate (PC) having a thermal conductivity of 0.19 W/(m·K). The battery 23 is a lithium ion battery, and supplies electric power to a head-up display device 17 through an unillustrated wire. The battery case 21 is fixed to the inner surface of the shell 13 by an unillustrated fixing unit. An air layer 27 is interposed between the concavity 15a of the shock absorbing liner 15 and the battery unit 25. The battery unit 25 is interposed between the lower end of the shell 13 and the lower end of the shock absorbing liner 15, and exposed downward. The battery unit 25 may be disposed between the lower end portion of the shell 13 and the lower end portion of the shock absorbing liner 15 and covered from below with a member of a material having a thermal conductivity higher than that of the shock absorbing liner 15.

The lower surface of the battery case 21 has a releasing hole 21a from which an exhaust gas from the battery 23 is released. The battery case 21 does not have any unit for allowing the inside and the outside of the battery case 21 to communicate with each other except for the releasing hole 21a.

One end (first end) 29a of a vent pipe 29 projecting downward is coupled to a peripheral portion of the releasing hole 21a of the battery case 21, and the other end (second end, or front end) 29b of the vent pipe 29 is located substantially at the center of the opening portion 3a of the helmet body 3. Thus, between the substantially center portion of the opening portion 3a of the helmet body 3 and the releasing hole 21a of the battery case 21, a gas vent passage R1 for guiding an exhaust gas from the releasing hole 21a to the opening portion 3a is formed in the inner side of the vent pipe 29, and the opening portion 3a of the helmet body 3 and the releasing hole 21a of the battery case 21 communicate with each other. The vent pipe 29 may be made of the same material as that for the battery case 21, or may be made of a material different from a material for the battery case 21. In the case where the vent pipe 29 is made of the same material as that of the battery case 21, the vent pipe 29 can be formed integrally with the battery case 21.

A waterproof ventilation filter 31 made of expanded polytetrafluoroethylene (ePTFE) is disposed at the second end 29b of the vent pipe 29, that is, at substantially the center of the opening portion 3a of the helmet body 3 such that the waterproof ventilation filter 31 restricts water infiltration into the battery case 21.

On the other hand, the head-up display device 17 is disposed at the left of the center in the left-right direction between the shell 13 and the shock absorbing liner 15 when seen from the helmet wearer P below the window opening 5, that is, at a portion covering the chin of the helmet wearer P from the left. The head-up display device 17 receives information from communication equipment such as an unillustrated smartphone, and based on the received information, generates an image to be displayed by the combiner 11, and outputs display light for causing the combiner 26 to display the generated image. The head-up display device 17 receives electric power from the battery 23 through an unillustrated wire. The head-up display device 17 includes a charging control device 17a for controlling charging to the battery 23 based on a connection state between the charging connector 16 and a power supply-side connector 31 described later. A mirror 19 that reflects display light output by the head-up display device 17 to the combiner 11 is interposed at the right of the center in the left-right direction between the shell 13 and the shock absorbing liner 15 when seen from the helmet wearer P below the window opening 5.

The shell 13 and the shock absorbing liner 15 detachably sandwich an end portion of a neck cover 29 (see FIG. 6) covering the neck of the helmet wearer P.

In charging the battery 23, the charging connector 16 is connected to the power supply-side connector 31. The power supply-side connector 31 includes an insertion part 31b and a holder 31c. The insertion hole 31b includes a cover portion 31a and an unillustrated power supply-side electrode disposed inside the cover portion 31a. The power supply-side connector 31 is connected to the power supply 35 through a power supply-side cable 33. The insertion part 31b of the thus-configured power supply-side connector 31 is inserted into the insertion hole 16b of the charging connector 16 from the inner side of the helmet body 3 so that the charging electrode 16 and the power supply-side electrode can be made conduct. As described above, since the power supply-side connector 31 is connected to the charging connector 16 from the inside of the helmet body 3 during charging of the battery 23, the power supply-side cable 33 is partially located inside the helmet body 3 and hinders wearing of the helmet 1. This makes it possible to prevent wearing of the helmet 1 during charging in which problems such as heat generation and ignition of the battery 23 is more likely to occur than during non-charging.

As illustrated in FIG. 1, in an on-surface charging state in which the helmet body 3 of the helmet 1 is placed on a flat surface F with the lower end surface of the helmet body 3 facing downward and the charging connector 16 and the power supply-side connector 31 are connected to each other, the power supply-side connector 31 is separated from the flat surface F. This can prevent or reduce damage of the power supply-side connector 31 and backlash of the helmet 1 caused by contact of the power supply-side connector 31 with the flat surface F in the on-surface charging state. In addition, in the on-surface charging state, a gap S in which the power supply-side cable 33 can be inserted is formed between the recessed portion 3a of the helmet body 3 and the flat surface F. Thus, since the power supply-side cable 33 can be inserted in the gap S between the recessed portion 3a of the helmet 1 and the flat surface F, it is possible to prevent or reduce damage of the power supply-side cable 33 caused by sandwiching of the power supply-side cable 33 between the lower edge of the helmet 1 and the flat surface F.

Thus, in the first embodiment, since the charging connector 16 is not exposed on the outer surface of the shell 13, appearance of the helmet 1 can be enhanced, as compared to a case where the charging connector 16 is provided to face the outer side of the shell 13.

In addition, since the outer side of the charging connector 16 is covered with the shell 13, a failure of the charging connector 16 due to exposure to the weather can be prevented or reduced.

As compared to a case where both the charging connector 16 and the charging control device 17a are disposed at a portion covering the chin of the helmet wearer P and the charging connector 16 is disposed in, for example, an occipital portion, the charging connector 16 is located near the charging control device 17a. Thus, wires connecting the charging connector 16 and the charging control device 17a can be made short.

Since the battery unit 25 is not exposed on the outer surface of the shell 13, appearance of the helmet 1 can be enhanced, as compared to a case where the battery unit 25 is provided on the outer surface of the shell 13.

In addition, when the helmet body 3 collides against the ground, for example, a load of the collision is absorbed in the shock absorbing liner 15. Accordingly, a shock load exerted on the battery unit 25 at the collision can be reduced.

Furthermore, since the shell 13 covers the outer side of the battery unit 25, the battery unit 25 is not likely to fly out of the helmet body 3 at the collision.

Since the thermal conductivity of the shell 13 is higher than the thermal conductivity of the shock absorbing liner 15, heat of the battery unit 25 more easily transfers to the shell 13 than the shock absorbing liner 15. Thus, it is possible to reduce transfer of heat of the battery unit 25 to the head of the helmet wearer through the shock absorbing liner 15 when the battery 23 reaches a high temperature around 150°C because of a failure.

Since the air layer 27 having a low thermal conductivity is interposed between the battery unit 25 and the shock absorbing liner 15, heat of the battery unit 25 does not easily transfer to the shock absorbing liner 15. Thus, it is possible to reduce transfer of heat of the battery unit 25 to the head of the helmet wearer more effectively.

Since the thermal conductivity of the shell 13 is set at 0.2 W/(m·K) or more, heat of the battery unit 25 more easily transfers to the shell 13 than that in a case where the thermal conductivity of the shell 13 is set to be less than 0.2 W/(m·K). Thus, it is possible to prevent or reduce accumulation of heat of the battery unit 25 between the shell 13 and the shock absorbing liner 15 so that heating of the battery 23 can be reduced.

Since the thermal conductivity of the shock absorbing liner 15 is set at 0.05 W/(m·K) or less, heat of the battery unit 25 does not easily transfers to the shock absorbing liner 15, as compared to a case where the thermal conductivity of the shock absorbing liner 15 is set at a value exceeding 0.05 W/(m·K). Thus, it is possible to reduce transfer of heat of the battery unit 25 to the head of the helmet wearer more effectively.

Since the battery unit 25 exposed downward, heat of the battery unit 25 can be released downward so that transfer of heat of the battery unit 25 to the head of the helmet wearer through the shock absorbing liner 15 can be reduced. In addition, accumulation of heat of the battery unit 25 between the shell 13 and the shock absorbing liner 15 can be prevented or reduced so that heating of the battery 23 can be reduced.

Since the thermal conductivity of the battery case 21 is set to be less than 0.2 W/(m·K), heat of the battery 23 does not easily transfer to the shock absorbing liner 15 through the battery case 21, as compared to a case where the thermal conductivity of the battery case 21 is set at 0.2 W/(m·K) or more. As a result, transfer of heat of the battery 23 to the head of the helmet wearer can be more effectively reduced.

Since the thickness T of the shock absorbing liner 15 in a region where the battery unit 25 is interposed between the shock absorbing liner 15 and the shell 13 is set at 20 mm or more, transfer of heat of the battery 23 to the head of the helmet wearer through the shock absorbing liner 15 can be effectively reduced, as compared to a case where the thickness T is less than 20 mm. Specifically, in a case where the thickness T of the shock absorbing liner 15 in the region where the battery unit 25 is interposed between the shock absorbing liner 15 and the shell 13 is 20 mm, the thermal conductivity of the shock absorbing liner 15 is 0.04 W/(m·K), and the temperature in the helmet is 35°C, even when the battery 23 is heated to 130°C because of a failure such as short circuit, the temperature at the inner surface of the shock absorbing liner 15 is at such a temperature that does not cause burns (about 45°C).

In addition, since an exhaust gas from the battery 23 is released to the outside of the helmet body 3 through the releasing hole 21a of the battery case 21 and the opening portion 3a of the helmet body 3, it is possible to reduce accumulation of an exhaust gas in the shell 13 and a flow of the exhaust gas toward a vicinity of the face of the helmet wearer.

Since heat of the battery 23 can be released to the outside of the helmet body 3 through the releasing hole 21a of the battery case 21 and the opening portion 3 a of the helmet body 3, heat of the battery 23 transferred to the head of the helmet wearer can be reduced.

Furthermore, since the gas vent passage R1 is interposed between the opening portion 3 a of the helmet body 3 and the releasing hole 21a of the battery case 21, the opening portion 3a of the helmet body 3 and the releasing hole 21a of the battery case 21 can be disposed at separate positions. As a result, flexibility in arranging the opening portion 3a of the helmet body 3 and the releasing hole 21a of the battery case 21 can be increased.

### SECOND EMBODIMENT

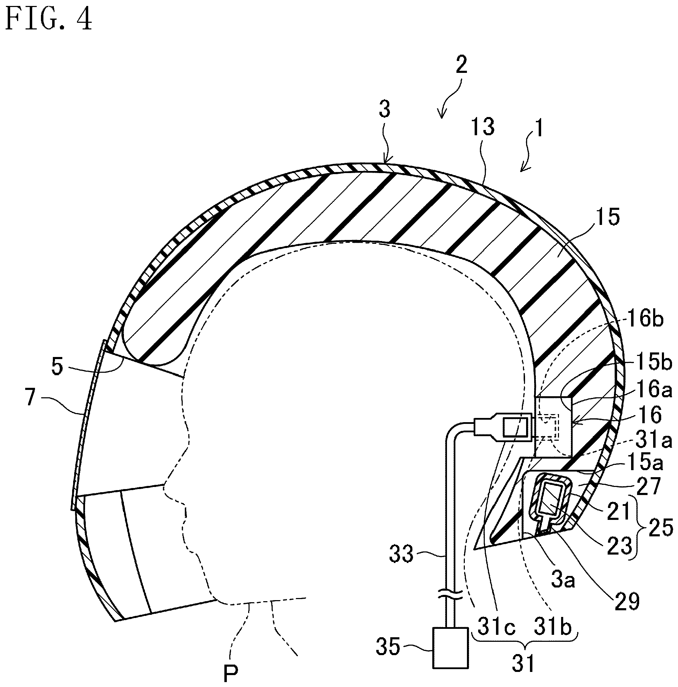

FIG. 4 illustrates a helmet 1 according to a second embodiment of the present disclosure. In the second embodiment, a recess 15b of a shock absorbing liner 15 is disposed at a position slightly below the center in the top-bottom direction of the center in the left-right direction of a rear portion of the shock absorbing liner 15, that is, at a portion covering the occipital of a helmet wearer P, and a charging connector 16 is disposed in the recess 15b.

The other part of the configuration is the same as that in the first embodiment, and thus, the same components are denoted by the same reference characters, and detailed description thereof will not be repeated.

Thus, in the second embodiment, during charging of the battery 23, a power supply-side connector 31 is connected to the charging connector 16 from the inner side at a portion covering the occipital of the helmet wearer P on the inner surface of the helmet body 3, and a power supply-side cable 33 is located at a position interfering with the occipital of the helmet wearer P. This further ensures prevention or reduction of wearing of a helmet 1 during charging of a battery 23.

### THIRD EMBODIMENT

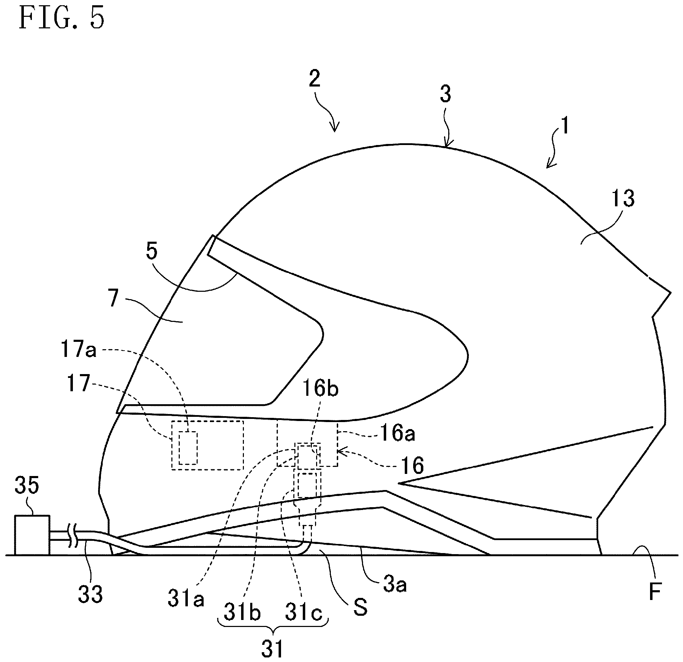

FIGS. 5 and 6 illustrate a helmet 1 according to a third embodiment of the present disclosure. In the third embodiment, a recess 15b of a shock absorbing liner 15 is formed to be recessed inward of a helmet body 3 at a lower end of the left end of a front portion on the outer surface of the shock absorbing liner 15, that is, at a portion covering the chin of a helmet wearer P from the left. A charging connector 16 is disposed between a shell 13 and the recess 15b of the shock absorbing liner 15, and faces downward of the helmet body 3. Thus, an insertion hole 16b of the charging connector 16 is open downward of the helmet body 3. The opening of the insertion hole 16b of the charging connector 16 is located above the lower end surface of the helmet body 3, that is, the lower end surfaces of the shell 13 and the shock absorbing liner 15. In the on-surface charging state described above, a power supply-side connector 31 is separated from a flat surface F.

The other part of the configuration is the same as that in the first embodiment, and thus, the same components are denoted by the same reference characters, and detailed description thereof will not be repeated.

In the second embodiment, the charging connector 16 is disposed at the potion covering the occipital of the helmet wearer P on the inner surface of the helmet body 3. Alternatively, the charging connector 16 may be disposed at a portion covering a temple of the helmet wearer P on the inner surface of the helmet body 3.

In the embodiment describe above, the battery case 21 is fixed to the inner surface of the shell 13, but the battery case 21 may be a cartridge detachably attached to the shell 13 or the shock absorbing liner 15.

### FOURTH EMBODIMENT

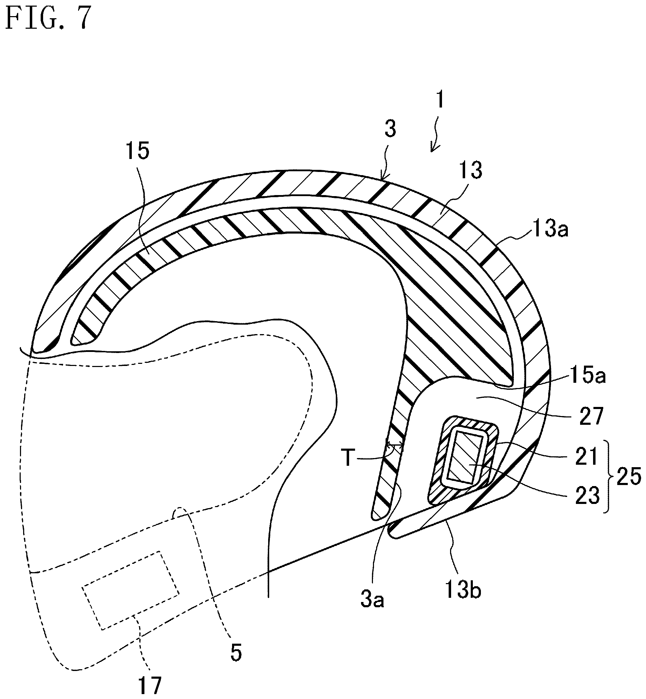

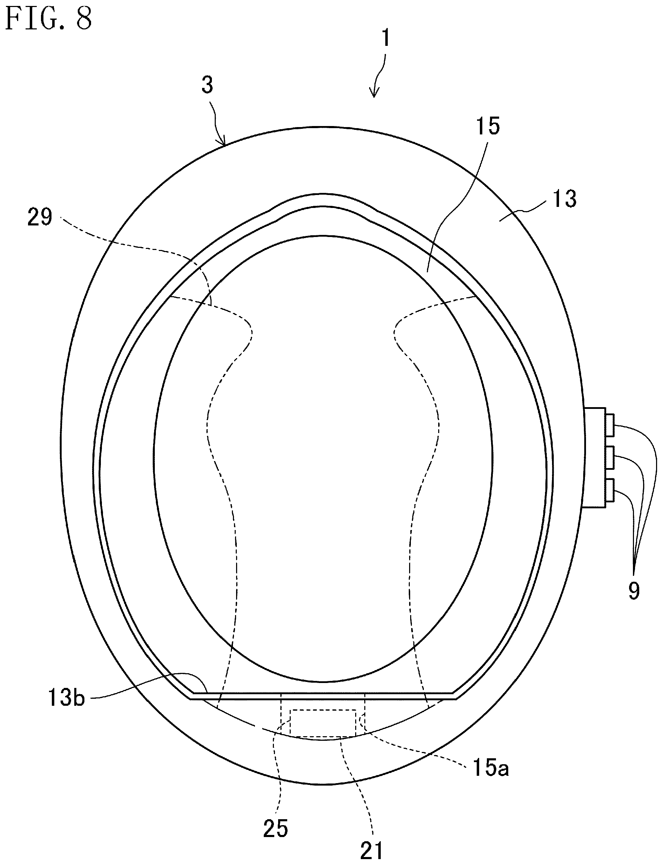

FIGS. 7 and 8 illustrate a helmet 1 according to a fourth embodiment of the present disclosure. In the fourth embodiment, a shell 13 includes a shell body 13a of a shape covering the head and the neck of a helmet wearer from above and from the sides, and also includes a cover portion 13b integrally projecting forward (inward) from the lower end of a rear portion of the shell body 13 a. A battery unit 25 is covered from below with the cover portion 13b of the shell 13. In this embodiment, no vent pipe 29 is provided.

The other part of the configuration is the same as that in the first embodiment, and thus, the same components are denoted by the same reference characters, and detailed description thereof will not be repeated.

Thus, in the fourth embodiment, the battery unit 25 is covered from below with the cover portion 13b of the shell 13 having a thermal conductivity higher than that of a shock absorbing liner 15. Thus, heat of the battery unit 25 can be released downward through the cover portion 13b of the shell 13. This makes it possible to reduce transfer of heat of the battery unit 25 to the head of the helmet wearer thorough the shock absorbing liner 15. In addition, accumulation of heat of the battery unit 25 between the shell 13 and the shock absorbing liner 15 can be prevented or reduced so that heating of the battery 23 can be reduced.

In the embodiment describe above, a battery case 21 is fixed to the inner surface of the shell 13, but the battery case 21 may be a cartridge detachably attached to the shell 13 or the shock absorbing liner 15.

In the embodiment describe above, although the battery unit 25 is covered from below with a part of the shell 13, the battery unit 25 may be covered with another member of a material having a thermal conductivity higher than that of the shock absorbing liner 15.

### FIFTH EMBODIMENT

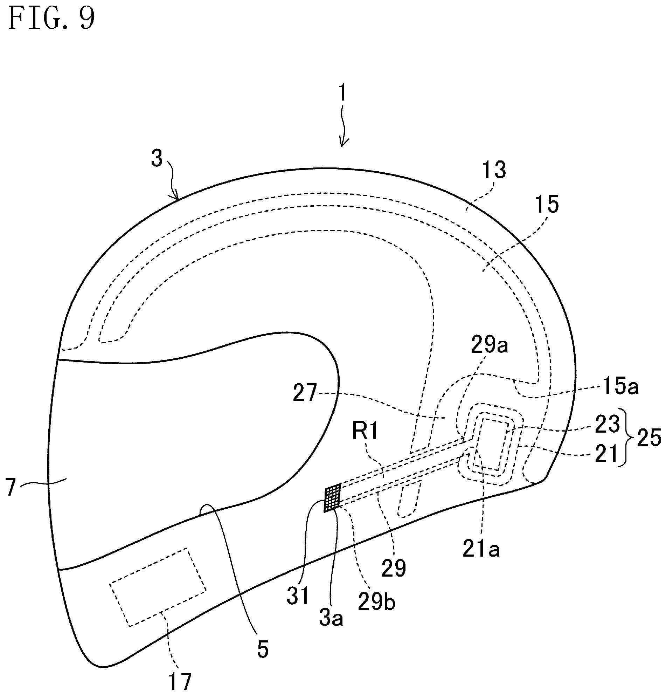

FIG. 9 illustrates a helmet 1 according to a fifth embodiment of the present disclosure. In FIG. 9, a periphery of switches 9 is not shown. In the fifth embodiment, an opening portion 3a of a helmet body 3 is disposed below the center in the top-bottom direction of a left side portion of a shell 13 when seen from a helmet wearer (at a portion covering the left cheek of the helmet wearer). On the other hand, a releasing hole 21a of a battery case 21 is formed in the front surface (side surface) of the battery case 21. A vent pipe 29 projects obliquely forward to the left when seen from the helmet wearer from a peripheral portion of the releasing hole 21a of the battery case 21. A second end 29b of the vent pipe 29 is coupled to a peripheral portion of the opening portion 3a of the helmet body 3.

The other part of the configuration is the same as that in the first embodiment, and thus, the same components are denoted by the same reference characters, and detailed description thereof will not be repeated.

Thus, in the fifth embodiment, since the shell 13 has the opening portion 3a, contact of a high-temperature exhaust gas with the neck of the helmet wearer can be reduced, as compared to the case where the lower end surface of the helmet body 3 has the opening portion 3a as in the first embodiment.

### SIXTH EMBODIMENT

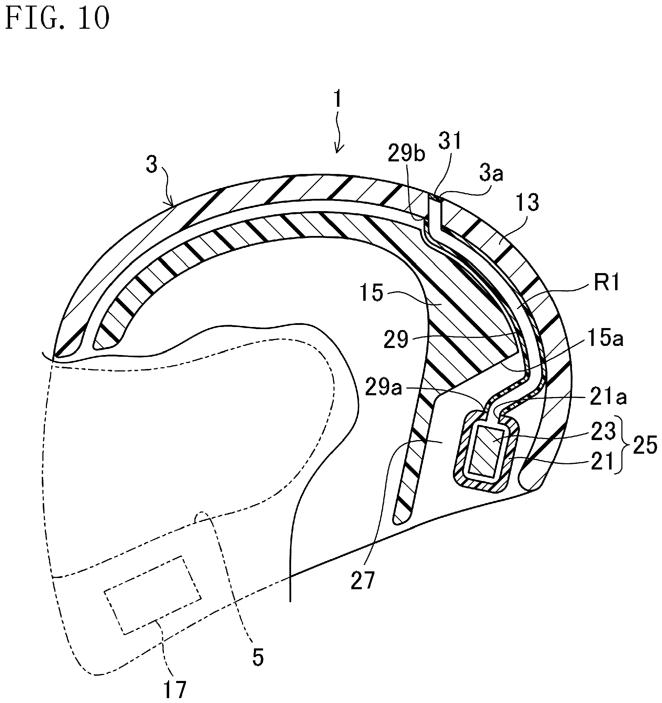

FIG. 10 illustrates a helmet 1 according to a sixth embodiment of the present disclosure. In the sixth embodiment, an opening portion 3a of a helmet body 3 is formed near the upper end of the center in the left-right direction of a rear portion of a shell 13 (i.e., at a portion covering the top of the head of a helmet wearer). On the other hand, a releasing hole 21a of a battery case 21 is formed in the upper surface of a battery case 21. A vent pipe 29 projects upward while being curved along the back surface of the shell 13 from a peripheral portion of the releasing hole 21a of the battery case 21.

The other part of the configuration is the same as that in the first embodiment, and thus, the same components are denoted by the same reference characters, and detailed description thereof will not be repeated.

Thus, in the sixth embodiment, although the face of a passenger on the rear seat is often located near a lower portion of the shell 13 in general, since an upper portion of the shell 13 has the opening portion 3a, contact of a high-temperature exhaust gas with the passenger on the rear seat can be reduced, as compared to a case where a lower portion of the shell 13 has the opening portion 3a.

### SEVENTH EMBODIMENT

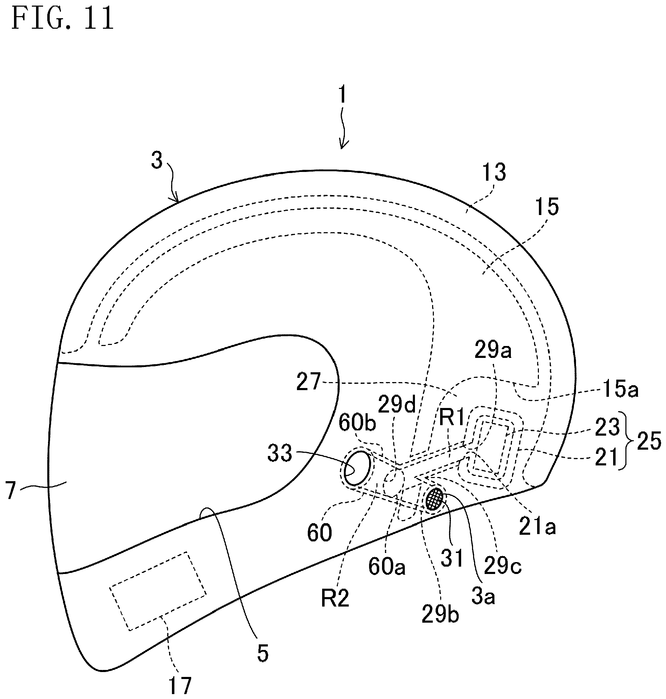

FIG. 11 illustrates a helmet 1 according to a seventh embodiment of the present disclosure. In FIG. 11, a periphery of switches 9 is not shown. In the seventh embodiment, an air inlet 33 is formed below the center in the top-bottom direction of a left side portion of a shell 13 when seen from a helmet wearer (i.e., at a portion covering the left cheek of the helmet wearer), and an opening portion 3a is formed slightly behind the air inlet 33. On the other hand, a releasing hole 21a of a battery case 21 is formed in the front surface (side surface) of the battery case 21. A bent portion 29c is formed in a halfway portion of a vent pipe 29. A portion of the vent pipe 29 closer to a battery case 21 than the bent portion 29c projects obliquely forward to the left when seen from the helmet wearer from a peripheral portion of the releasing hole 21a of the battery case 21, whereas a portion of the vent pipe 29 closer to the opening portion 3a than the bent portion 29c extends obliquely rearward to the left when seen from the helmet wearer from the bent portion 29c. An end of the vent pipe 29 toward the opening portion 3a is coupled to a peripheral portion of the opening portion 3a of the helmet body 3.

A through hole 29d that is open obliquely forward to the left when seen from the helmet wearer is formed in a portion of the vent pipe 29 adjacent to the bent portion 29c. One end 60a of a ventilation pipe 60 extending obliquely forward to the left when seen from the helmet wearer is coupled to a peripheral portion of the through hole 29d. The other end 60b of the ventilation pipe 60 is coupled to a peripheral portion of the air inlet 33 of the shell 13. Thus, a ventilation passage R2 for guiding air introduced from the air inlet 33 to a gas vent passage R1 is formed between the air inlet 33 of the shell 13 and the gas vent passage R1. The gas vent passage R1 closer to the opening portion 3a than the bent portion 29c and the ventilation passage R2 are continuous linearly.

In the embodiment describe above, although the waterproof ventilation filter 31 is disposed at the opening portion 3a of the helmet body 3, the waterproof ventilation filter 31 may be provided at the releasing hole 21a of the battery case 21.

In the third embodiment, although the opening portion of the helmet body is formed near the upper end of the center in the left-right direction of the rear portion of the shell 13, the opening of the helmet body may be formed in another portion above the center in the top-bottom direction of the shell 13.

In the seventh embodiment, although the air inlet 33 is formed in a side portion of the shell 13, the air inlet 33 may be formed in a front portion of the shell 13.

In the embodiment describe above, the battery case 21 is fixed to the inner surface of the shell 13, but the battery case 21 may be a cartridge detachably attached to the shell 13 or the shock absorbing liner 15.

In the embodiment describe above, the opening portion 3a of the helmet body 3 is formed in a left side portion of the shell 13 when seen from the helmet wearer, and the vent pipe 29 projects obliquely forward to the left when seen from the helmet wearer from the peripheral portion of the releasing hole 21a of the battery case 21. Alternatively, the opening portion 3a of the helmet body 3 may be formed in a right side portion of the shell 13 when seen from the helmet wearer with the vent pipe 29 projecting obliquely forward to the right when seen from the helmet wearer from a peripheral portion of the releasing hole 21a of the battery case 21.

In the embodiment describe above, the air inlet 33 and the opening portion 3a are formed in the left side portion of the shell 13 when seen from the helmet wearer, the vent pipe 29 projects obliquely leftward from the releasing hole 21a of the battery case 21, and the ventilation pipe 60 extends obliquely forward to the left from the through hole 29d of the vent pipe 29. Alternatively, the air inlet 33 and the opening portion 3a may be formed in a right side portion of the shell 13 when seen from the helmet wearer with the vent pipe 29 projecting obliquely rightward from the releasing hole 21a of the battery case 21 and the ventilation pipe 60 extending obliquely forward to the right from the through hole 29d of the vent pipe 29.

### EIGHTH EMBODIMENT

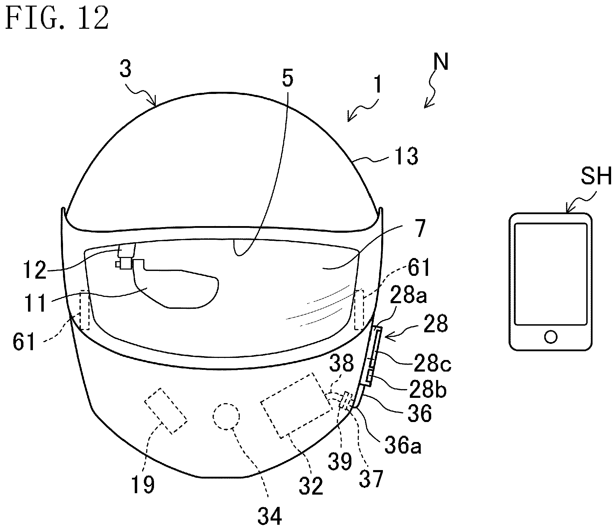

FIG. 12 illustrates a navigation system N including a helmet 1. The navigation system N includes a smartphone SH and the helmet 1 according to any one of the first through seventh embodiments.

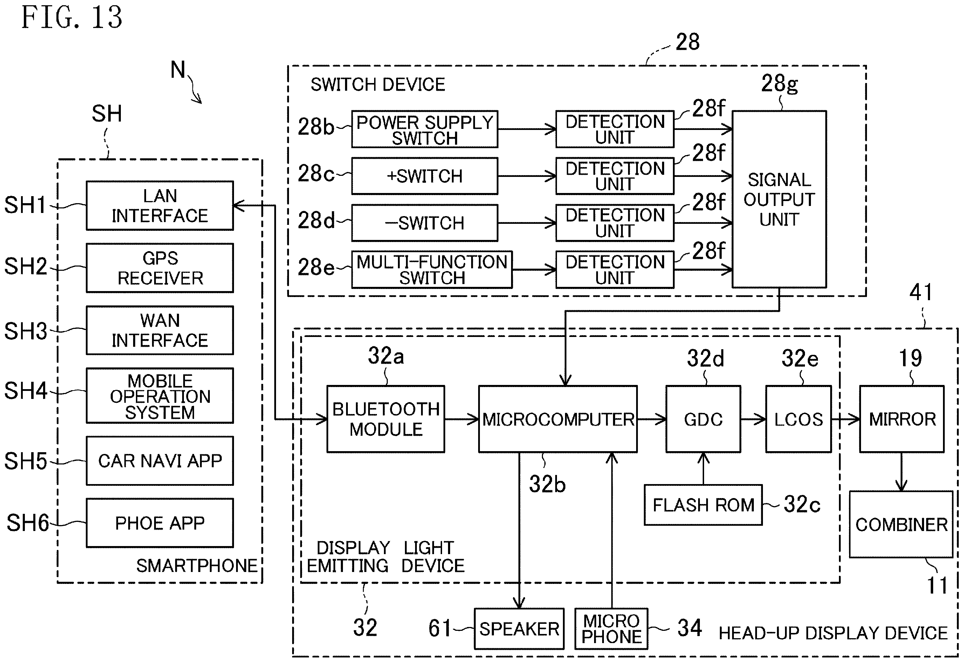

As illustrated in FIG. 13, the smartphone SH includes a LAN interface SH1 that performs wireless communication using Bluetooth (registered trademark), a GPS receiver SH2, and a WAN interface SH3 that transmits and receives an audio signal through a cellular phone line or an Internet line. The smartphone SH is equipped with a mobile operation system SH4 that is an OS of the smartphone SH, a car navigation service application (hereinafter referred to as a "car navi app") SH5 that is operated on the mobile operation system SH4 by using, for example, positional information acquired by the GPS receiver SH2, and a phone application (hereinafter referred to as a "phone app") SH6 that is operated on the mobile operation system SH4. The smartphone SH is configured to use the car navi app SH5, acquire distance information indicating a distance to a predetermined guide point, direction information indicating a traveling direction at the guide point, and speed information indicating a current speed at every one second, and transmit the information through wireless communication by the LAN interface SH1. In communication using the phone app SH6, the smartphone SH transmits an audio signal received by the WAN interface SH3 through wireless communication by the LAN interface SH1, and transmits the audio signal received through wireless communication by the LAN interface SH1 to an unillustrated external device by the WAN interface SH3.

A switch device 28 is disposed at the left of a window opening 5 on the outer surface of the helmet body 3 when seen from a helmet wearer, that is, at a position corresponding to an ear of the helmet wearer. The switch device 28 includes a case member 28a. The back surface of the case member 28a is bonded to the outer surface of the helmet body 3 through an unillustrated double face tape. The strength of a bonding force of the double face tape is set at such a degree that enables the switching device 28 to be detached from the outer surface of a shell 13 at collision of the helmet 1 against the ground. On the other hand, a power supply switch 28b as a pressing member, a +switch 28c, a -switch 28d, and a multi-function switch 28e are disposed on the surface of the case member 28a. The case member 28a accommodates an unillustrated board. Four detection units 28f (see FIG. 13) for detecting pressing operations of the switches 28b through 28e and a signal output unit 28g (see FIG. 13) for outputting an input signal in response to detection results of the detection units 28f are mounted on the board. When the helmet wearer performs a pressing operation as an operation input on one of the switches 28b through 28e, the detection units 28f detects the pressing operation, and the signal output unit 28g outputs an input signal in response to the pressing operation detected by the detection units 28f.

Specifically, when the power supply switch 28b of the switch device 28 is pressed and held, the corresponding detection unit 28f detects this pressing operation, and the signal output unit 28g outputs a first input signal indicating that the power supply switch 28b is pressed and held. When the +switch 28c of the switch device 28 is pressed, the corresponding detection unit 28f detects this pressing operation, and the signal output unit 28g outputs a second input signal indicating that the +switch 28c is pressed. When the -switch 28d of the switch device 28 is pressed, the corresponding detection unit 28f detects this pressing operation, and the signal output unit 28g outputs a third input signal indicating that the -switch 28d is pressed. When the multi-function switch 28e of the switch device 28 is pressed, the corresponding detection unit 28f detects this pressing operation, and the signal output unit 28g outputs a fourth input signal indicating that the multi-function switch 28e is pressed.

A display light emitting device 32 as a signal processing device is disposed at the left of the center in the left-right direction below the window opening 5 between the shell 13 and the shock absorbing liner 15 when seen from the helmet wearer, that is, at a portion covering the chin of the helmet wearer from the left. The display light emitting device 32 is supplied with electric power through an unillustrated wire by, for example, the battery unit 25 according to the first embodiment. The display light emitting device 32, a combiner 11, and a mirror 19 constitute a head-up display device 41.

A microphone 34 that convers voice of the helmet wearer to an electrical signal and outputs the signal is disposed at the center in the left-right direction below the window opening 5 on the inner surface of the shock absorbing liner 15. Speakers 61 that receive an electrical signal, convert the electrical signal to sound, and output the sound is disposed at the left and right sides of the window opening 5 on the inner surface of the shock absorbing liner 15, that is, at portions covering the ears of the helmet wearer.

As illustrated in FIG. 13, the display light emitting device 32 includes a Bluetooth module 32a as a wireless communication section capable of communicating with the smartphone SH using Bluetooth (registered trademark), a microcomputer 32b, a flash read only memory (ROM) 32c, a graphics display controller (GDC) 32d, and a liquid crystal on silicon (LCOS) 32e.

The Bluetooth module 32a receives distance information indicating a distance to a predetermined guide point, direction information indicating a traveling direction at the guide point, and speed information indicating a current speed at every predetermined time from the LAN interface SH1 of the smartphone SH. The Bluetooth module 32a also receives an audio signal sent from the LAN interface SH1 of the smartphone SH, and transmits an audio signal output from the microphone 34 to the LAN interface SH1 of the smartphone SH.

Based on the distance information and the direction information received by the Bluetooth module 32a, the microcomputer 32b instructs the GDC 32d to generate an image. The microcomputer 32b outputs the audio signal received by the Bluetooth module 32a to the speakers 61, and controls volumes of the speakers 61. The microcomputer 32b causes the Bluetooth module 32a to transmit an audio signal output from the microphone 34.

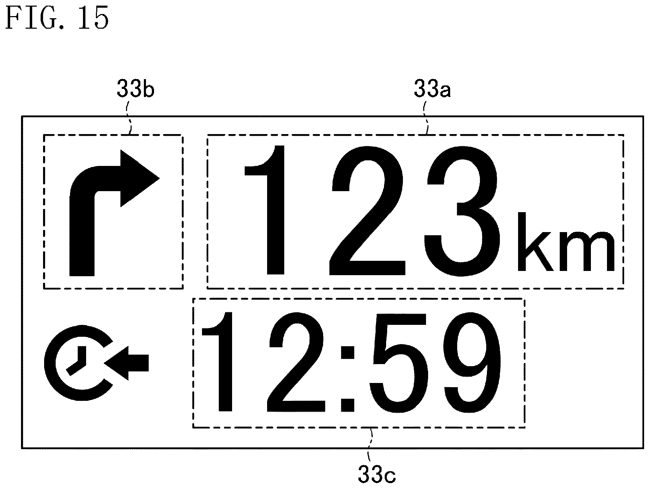

Based on an instruction by the microcomputer 32b, the GDC 32d combines figures and others stored in the flash ROM 32c and generates a guide image as illustrated in FIG. 15. The guide image represents a distance 33a to a guide point, a traveling direction 33b at the guide point, and an estimated value 33c of a required time to the guide point.

The LCOS 32e emits display light for causing the combiner 11 to display a guide image generated by the GDC 32d.

The display light emitting device 32 operates based on an input signal output by the switch device 28. For example, when the power supply switch 28b of the switch device 28 is pressed and held and the switch device 28 outputs a first input signal in a state where the display light emitting device 32 is not actuated, the display light emitting device 32 is actuated in response to the first input signal and starts emitting display light. When the power supply switch 28b of the switch device 28 is pressed and held and the switch device 28 outputs a first input signal in a state where the display light emitting device 32 is actuated, the display light emitting device 32 stops in response to the first input signal and finishes emitting display light. When +switch 28c of the switch device 28 is pressed and the switch device 28 outputs a second input signal, the microcomputer 32b of the display light emitting device 32 increases the volume of the speakers 61 in response to the second input signal. On the other hand, when -switch 28d of the switch device 28 is pressed and the switch device 28 outputs a third input signal, the microcomputer 32b of the display light emitting device 32 reduces the volume of the speakers 61 in response to the third input signal.

When the display light emitting device 32 is actuated, the car navi app SH5 of the smartphone SH is executed so that distance information and direction information are thereby received by the display light emitting device 32. Based on the distance information and the direction information, the GDC 32d generates a guide image, and display light in accordance with the guide image is emitted from the LCOS 32e and reflected on the mirror 19. The display light reflected on the mirror 19 is projected to the combiner 11, and is further reflected by the combiner 11 to enter a field of view of the helmet wearer. Accordingly, the helmet wearer visually recognizes a display image by display light as a virtual image with the display image superimposed on scenery of a forward field of view through the combiner 11.

The switch device 28 and the display light emitting device 32 are connected to each other by a cable unit 40 including a first cable 36 having one end connected to the switch device 28, a first connector 37 disposed at the other end of the first cable 36, a second cable 38 having one end connected to the display light emitting device 32, and a second connector 39 disposed at the other end of the second cable 38 and detachably connected to the first connector 37. Accordingly, input signals (e.g., first through third input signals) output from the switch device 28 are transmitted to the display light emitting device 32 through the first cable 36, the first connector 37, the second connector 39, and the second cable 38. As the first and second connectors 37 and 39, a wire-to-wire connector having no lock mechanism or having a lock mechanism having a small extraction force. As the first and second connectors 37 and 39, connectors that can be detached upon application of a load corresponding to 1/2 of the weight of a helmet 20 is preferably used. Thus, in a case where the weight of the helmet 1 is 1.5 kg, a connector that is detached upon application of a load of 0.75 kgf (≈7.4 N) is preferably used as the first and second connectors 37 and 39. The first cable 36 includes a bent portion 36a in a longitudinally halfway portion. A part of the first cable 36 close to the switch device 28 relative to the bent portion 36a extends in the top-bottom direction along the outer surface of the shell 13, whereas a part of the first cable 36 close to the first connector 37 relative to the bent portion 36a and the second cable 38 extend inside the shell 13. Thus, the first and second connectors 37 and 39 are located inside the shell 13.

When the thus-configured helmet 1 collides against the ground, the switch device 28 is detached from the shell 13 by a shock of the collision. In addition, since the cable unit 40 connecting the switch device 28 and the display light emitting device 32 to each other includes the first and second connectors 37 and 39, the first and second connectors 37 and 39 can be easily separated from each other to be detached from the display light emitting device 32, as compared to a case where the cable unit 40 is constituted only by a single cable. Thus, the helmet body 3 is not pulled by the switch device 28 caught by an external object upon collision against the ground.

### NINTH EMBODIMENT

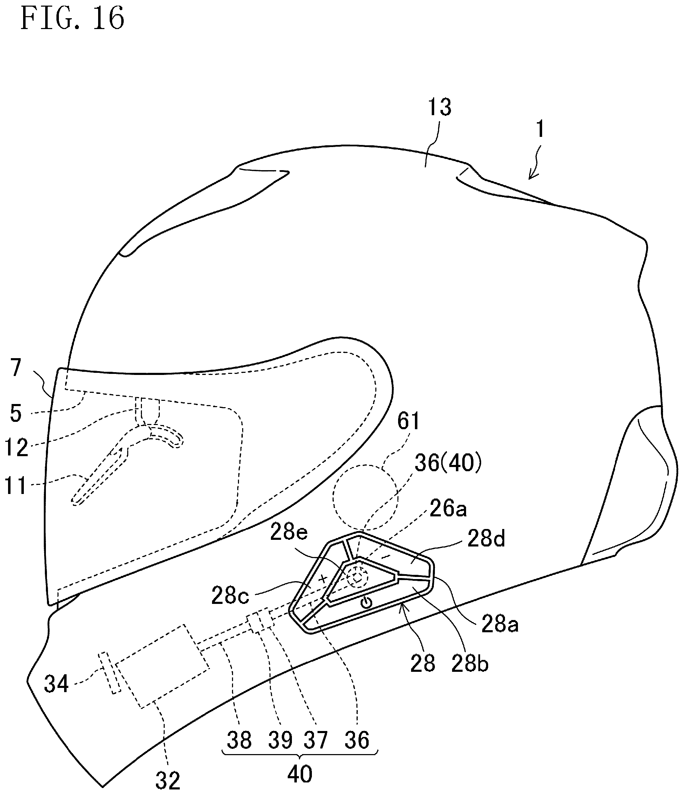

FIG. 16 illustrates a helmet 1 according to a ninth embodiment of the present disclosure. In the ninth embodiment, an insertion hole 26a is formed to penetrate a shell 13 at the left of a window opening 5 of the shell 13 when seen from a helmet wearer, that is, at a position corresponding to an ear of the helmet wearer. A switch device 28 covers the insertion hole 26a from above. A first cable 36 of a cable unit 40 is inserted in the insertion hole 26a.

The other part of the configuration is the same as that in the eighth embodiment, and thus, the same components are denoted by the same reference characters, and detailed description thereof will not be repeated.

Thus, in the ninth embodiment, the switch device 28 and a display light emitting device 32 can be connected to each other by the cable unit 40 without the necessity for exposing the cable unit 40 at the outer surface of a shell 13. Thus, appearance of a helmet 20 can be enhanced.

In the embodiments describe above, the signal processing device connected to the switch device 28 by the cable unit 40 is the display light emitting device 32. Alternatively, another signal processing device may be used as long as the signal processing device operates based on an input signal output from the switch device 28.

In the embodiments describe above, the cable unit 40 includes two cables and two connectors, but may include three or more cables and four or more connectors.

### INDUSTRIAL APPLICABILITY

The present disclosure is useful for a helmet including a battery and a helmet body whose outer surface is constituted by a shell.

### DESCRIPTION OF REFERENCE CHARACTERS

- 1: helmet
- 2: charging system
- 3: helmet body
- 3a: recessed portion (gap portion)
- 13: shell
- 16: charging connector
- 17a: charging control device
- 23: battery
- 31: power supply-side connector
- 33: power supply-side cable
- 35: power supply
- F: flat surface
- S: gap

## Claims

1. A helmet comprising:
a helmet body whose outer surface is constituted by a shell; and
a battery, wherein
a charging connector is disposed inside the shell to face inward or downward of the helmet body, the charging connector being configured to be connected to a power supply-side connector connected to a power supply through a power supply-side cable during charging of the battery.

2. The helmet according to claim 1, wherein
the charging connector is disposed to face inward of the helmet body.

3. The helmet according to claim 2, wherein
the charging connector is disposed at a portion covering temple or occipital of a helmet wearer on an inner surface of the helmet body.

4. The helmet according to claim 2, wherein
a charging control device is disposed at a portion of the helmet body covering chin of the helmet wearer, the charging control device being configured to control charging to the battery based on a connection state between the charging connector and the power supply-side connector, and
the charging connector is disposed at a portion covering chin of a helmet wearer on an inner surface of the helmet body.

5. A charging system comprising:
the helmet according to claim 1;
the power supply-side connector; and
the power supply-side cable, wherein
the power supply-side connector is configured to be separated from a flat surface in an on-surface charging state where the helmet body is placed on the flat surface with a lower end surface of the helmet body facing downward and where the charging connector and the power supply-side connector are connected to each other.

6. The charging system according to claim 5, wherein
a lower end surface of the helmet body has a gap portion, the gap portion forming a gap between the gap portion and the flat surface in which the power supply-side cable is capable of being inserted in the on-surface charging state.

7. A helmet comprising:
a shell; and
a shock absorbing liner disposed inside the shell, wherein
the shock absorbing liner is made of a material having a thermal conductivity lower than a thermal conductivity of the shell, and
a battery unit is inserted between the shell and the shock absorbing liner, the battery unit including a battery case and a battery housed in battery case.

8. The helmet according to claim 7, wherein
an air layer is interposed between the shock absorbing liner and the battery unit.

9. The helmet according to claim 7, wherein
the shell has a thermal conductivity of 0.2 W/(m·K) or more, and
the shock absorbing liner has a thermal conductivity of 0.05 W/(m·K) or less.

10. The helmet according to claim 7, wherein
the battery unit is covered, from below, with a member interposed between a lower end of the shell and a lower end of the shock absorbing liner, and is either exposed downward or made of a material having a thermal conductivity higher than a thermal conductivity of the shock absorbing liner.

11. The helmet according to claim 7, wherein
the battery case has a thermal conductivity less than 0.2 W/(m·K).

12. The helmet according to claim 7, wherein
a thickness of a region of the shock absorbing liner where the battery unit is interposed between the shock absorbing liner and the shock absorbing liner is set at 20 mm or more.

13. A helmet including a helmet body whose outer surface is constituted by a shell, wherein
at least one of a lower end surface of the helmet body or the shell has an opening,
a battery and a battery unit are disposed inside the shell, the battery unit having a releasing hole from which an exhaust gas from the battery is released, the battery unit including a battery case configured to house the battery, and
the opening of the helmet body and the releasing hole of the battery case communicate with each other.

14. The helmet according to claim 13, wherein
a gas vent passage configured to guide exhaust gas from the releasing hole to the opening of the helmet body is formed between the opening of the helmet body and the releasing hole of the battery case.

15. The helmet according to claim 13, wherein
a waterproof ventilation filter is disposed at the opening of the helmet body or the releasing hole of the battery case such that the waterproof ventilation filter restricts water infiltration into the battery case.

16. The helmet according to claim 13, wherein
the opening portion is formed in the shell.

17. The helmet according to claim 13, wherein
the opening portion is formed above a center in a top-bottom direction of the shell.

18. The helmet according to claim 13, wherein
a front portion or a side portion of the shell also includes an air inlet, and
a ventilation passage is formed between the air inlet of the shell and the gas vent passage, the ventilation passage being configured to guide air introduced from the air inlet to the gas vent passage.

19. A helmet comprising:
a helmet body whose outer surface is constituted by a shell;
a switch device disposed on an outer surface of the shell, the switch device being configured to output an input signal in response to an operation input; and
a signal processing device disposed inside the shell, the signal processing device being configured to operate based on the input signal, wherein
the switch device and the signal processing device are connected to each other by a cable unit, the cable unit including first and second cables configured to transmit the input signal, a first connector disposed at one end of the first cable, and a second connector disposed at one end of the second cable and detachably connected to the first connector.

20. The helmet according to claim 19, wherein
the shell has an insertion hole penetrating through the shell,
the switch device is disposed on the outer surface of the shell to cover the insertion hole from outside, and
the cable unit is inserted in the insertion hole.
